(19) Europäisches Patentamt
European Patent Office
Office européen des brevets

(11) **EP 2 840 072 A1**

(12) **EUROPEAN PATENT APPLICATION**
published in accordance with Art. 153(4) EPC

(43) Date of publication:
**25.02.2015 Bulletin 2015/09**

(21) Application number: **13778329.6**

(22) Date of filing: **19.04.2013**

(51) Int Cl.:
***C04B 35/468*** (2006.01) ***H01C 7/02*** (2006.01)

(86) International application number:
**PCT/JP2013/061688**

(87) International publication number:
**WO 2013/157650 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.04.2012 JP 2012096546**
**24.05.2012 JP 2012118120**
**21.12.2012 JP 2012279711**

(71) Applicant: **Hitachi Metals, Ltd.**
**Tokyo 105-8614 (JP)**

(72) Inventors:
- **SHIMADA, Takeshi**
  **Mishima-gun**
  **Osaka 618-0013 (JP)**
- **UEDA, Itaru**
  **Mishima-gun**
  **Osaka 618-0013 (JP)**
- **INO, Kentaro**
  **Mishima-gun**
  **Osaka 618-0013 (JP)**

(74) Representative: **Diehl & Partner GbR**
**Patentanwälte**
**Erika-Mann-Strasse 9**
**80636 München (DE)**

(54) **METHOD FOR PRODUCING SEMICONDUCTOR CERAMIC COMPOSITION**

(57) Provided is a method for producing a lead-free, perovskite semiconductor ceramic composition which is capable of suppressing the temperature coefficient of resistance $\alpha$ from becoming small, and obtaining stable characteristics. The method for producing a lead-free semiconductor ceramic composition in which a portion of Ba in a $BaTiO_3$-based oxide is substituted by Bi and A (in which A is at least one kind of Na, Li and K), the method including: calcining a raw material for forming the semiconductor ceramic composition at 700°C to 1,300°C; adding an oxide containing Ba and Ti, which becomes a liquid phase at 1,300°C to 1,450°C, to the calcined raw material; forming the same; and then sintering at a temperature of 1,300°C to 1,450°C.

*FIG. 4*

TEMPERATURE COEFFICIENT OF RESISTANCE (%/°C)
6
4
2
0
-2
1300
1320
1340
1360
1380
1400
1420
1440
SINTERING TEMPERATURE (°C)
◆0.59mol%
×0.51mol%
▲0.44mol%
✱0.37mol%
□0.29mol%

EP 2 840 072 A1

## Description

TECHNICAL FIELD

The present invention relates to a method for producing a semiconductor ceramic composition which is used for a PTC heater, a PTC thermistor, a PTC switch, a temperature detector and the like.

BACKGROUND ART

Conventionally, semiconductor ceramic compositions prepared by adding various semiconducting elements to a $BaTiO_3$-based oxide have been proposed as a material showing PTC (Positive Temperature Coefficient of resistivity) characteristic. The semiconductor ceramic composition can be used as a PTC element by providing electrodes thereon.
Most of semiconductor ceramic compositions composed of a $BaTiO_3$-based oxide have a Curie temperature of around 120°C. In these semiconductor compositions, the Curie temperature needs to be shifted according to use. For example, it has been proposed to shift the Curie temperature by adding an $SrTiO_3$-based oxide to a $BaTiO_3$-based oxide, but in this case, the Curie temperature is shifted only in a negative direction and is not shifted in a positive direction. Out of materials used in practice at present, the material known as an additive capable of shifting the Curie temperature in a positive direction is $PbTiO_3$. However, since lead is an element causing environmental pollution, a lead-free semiconductor ceramic material containing no lead has been recently demanded.
As the production method for a lead-free semiconductor ceramic composition, there has been proposed a method for producing a $BaTiO_3$-based semiconductor ceramic composition, in which at least one of Nb, Ta and rare earth elements is added to a composition which is represented by a composition formula of $Ba_{1-2X}(BiNa)_xTiO_3$ in which a portion of Ba in a $BaTiO_3$-based oxide is substituted by Bi-Na, in which x satisfies $0<x\leq0.15$, followed by subjecting the composition to calcination in nitrogen and then sintering in an oxidative atmosphere (Patent Document 1).
According to the production method described in Patent Document 1, the temperature coefficient of resistance as one of PTC characteristics can be prevented from decreasing. Also, in Examples of Patent Document 1, all of raw materials Ba, Ti, Bi and Na in the composition formula above are mixed at a time and then calcined.
In addition, as the production method for a lead-free semiconductor ceramic composition, a semiconductor ceramic composition having a crystal grain which is represented by a composition formula of $[(BiNa)_x(Ba_{1-y}R_y)_{1-x}]TiO_3$, wherein a center portion and an outer shell portion of the crystal grain are different from each other in composition has been proposed (Patent Document 2). In Patent Document 2, the semiconductor ceramic composition containing the crystal grain above is said to have an effect of increasing the amount of Schottky barrier formation and enhancing the temperature coefficient $\alpha$ of resistance. Patent Document 2 discloses a method of separately preparing a $(BaQ)TiO_3$ calcined powder (in which Q is a semiconducting element) and a $(BiNa)TiO_3$ calcined powder, and then mixing the powders, followed by forming and sintering the mixture.
Patent Document 3 describes a lead-free semiconductor ceramic composition and discloses a composition formula where the main component is a $Ba_mTiO_3$-based composition having a perovskite structure represented by formula $A_mBO_3$ and a portion of Ba constituting the A site is substituted by at least an alkali metal element, Bi, and a rare earth element. In Examples of Patent Document 3, there is disclosed a semiconductor ceramic composition having a main phase represented by the composition formula of $(Ba_{0.898}Na_{0.05}Bi_{0.05}Y_{0.002})_mTiO_3$+0.00025Mn, in which a Y raw material is added.

BACKGROUND ART DOCUMENT

PATENT DOCUMENT

Patent Document 1: JP-A-S56-169301
Patent Document 2: WO2007/097462
Patent Document 3: WO2010/067866

SUMMARY OF THE INVENTION

PROBLEMS THAT THE INVENTION IS TO SOLVE

Meanwhile, when the sintering temperature is low, the temperature coefficient of resistance of the semiconductor ceramic composition decreases. However, at the sintering of the semiconductor ceramic composition, since the temperature varies with location in the sintering furnace, the semiconductor ceramic composition can be hardly sintered at a uniform temperature. In particular, depending on the type of the sintering furnace or when the sintering furnace has a complicated structure, it is difficult to maintain a uniform temperature in the sintering furnace. Therefore, it has been difficult to stably obtain a lead-free semiconductor ceramic composition having a large temperature coefficient of resistance.

Accordingly, an object of the present invention is to provide a production method in which a lead-free semiconductor ceramic composition having a large temperature coefficient of resistance is stably obtained.

MEANS FOR SOLVING THE PROBLEMS

A method for producing a semiconductor ceramic composition according to the present invention is a method for producing a lead-free semiconductor ceramic composition in which a portion of Ba in a $BaTiO_3$-based oxide is substituted by Bi and A (wherein A is at least one kind of Na, Li and K), the method comprising:

calcining a raw material for forming the semiconductor ceramic composition at 700°C to 1,300°C;
adding an oxide containing Ba and Ti, which becomes a liquid phase at 1,300°C to 1,450°C, to the calcined raw material;
forming the raw material to which the oxide containing Ba and Ti was added; and then
sintering the raw material to which the oxide containing Ba and Ti was added at a temperature of 1,300°C to 1,450°C.

ADVANTAGE OF THE INVENTION

According to the method for producing a semiconductor ceramic composition of the present invention, a lead-free semiconductor ceramic composition having a large temperature coefficient of resistance is stably obtained.

BRIEF DESCRIPTION OF THE DRAWINGS

FIG. 1 is a view for explaining the method for producing a semiconductor ceramic composition according to an embodiment of the present invention.
FIG. 2 is a view for explaining the temperature coefficient of resistance.
FIG. 3 is a view for explaining the withstand voltage.
FIG. 4 is a view showing the relationship between the sintering temperature and the temperature coefficient $\alpha$ of resistance.
FIG. 5 is a view for explaining the method for producing a semiconductor ceramic composition according to an embodiment of the present invention.
FIG. 6 is a view for explaining the method for producing a semiconductor ceramic composition according to Comparative Example.
FIG. 7 is a view for explaining the method for producing a semiconductor ceramic composition according to an embodiment of the present invention.
FIG. 8 is a view showing the relationship between the oxygen concentration during sintering and the room-temperature resistivity $R_{25}$.

MODE FOR CARRYING OUT THE INVENTION

The method for producing a semiconductor ceramic composition in an embodiment of the present invention is a method for producing a lead-free semiconductor ceramic composition where a portion of Ba in a $BaTiO_3$-based oxide is substituted by Bi and A (wherein A is at least one kind of Na, Li and K), the method including:

calcining a raw material for forming the semiconductor ceramic composition at 700°C to 1,300°C;
adding an oxide containing Ba and Ti, which becomes a liquid phase at 1,300°C to 1,450°C, to the calcined raw material;
forming the raw material to which the oxide containing Ba and Ti was added; and then
sintering the raw material to which the oxide containing Ba and Ti was added at a temperature of 1,300°C to 1,450°C.

According to the production method in an embodiment of the present invention, an oxide containing Ba and Ti is added to the calcined raw material, whereby a semiconductor ceramic composition exhibiting a high temperature coefficient of resistance irrespective of the sintering temperature can be obtained. Therefore, even if the sintering temperature varies in the sintering furnace, a lead-free semiconductor ceramic composition having a large temperature coefficient of resistance can be stably obtained.

In the method for producing a semiconductor ceramic composition according to an embodiment of the present invention, the method may include:

preparing, as the raw material, a $(BiA)TiO_3$-based first raw material and a $(BaR)[TiM]O_3$ (wherein R is at least one kind of rare earth elements including Y, and M is at least one kind of Nb, Ta and Sb)-based second raw material, respectively;
calcining the first raw material at 700°C to 950°C and the second raw material at 900°C to 1,300°C;
preparing a third raw material by mixing respective calcined materials;
adding the oxide containing Ba and Ti to the third raw material; and then
forming and sintering the third raw material to which the oxide containing Ba and Ti was added.

According to the production method in an embodiment of the present invention, the first raw material and the second raw material are separately calcined, so that the first raw material containing easily vaporizable Bi can be calcined at a relatively low temperature to reduce the vaporization of Bi. As a result, the compositional deviation of Bi-A is suppressed and the production of a heterophase containing A is inhibited, whereby it is possible to prevent the semiconductor ceramic composition from reduction in the room-temperature resistivity and variation of the Curie temperature.

In the method for producing a semiconductor ceramic composition according to an embodiment of the present invention, the third raw material may be heat-treated at 900°C to 1,250°C, and then the oxide containing Ba and Ti may be added thereto.

According to the production method in an embodiment of the present invention, the oxide containing Ba and Ti is added after heat-treating the raw material, so that the heat-resistant temperature can be raised.

In the method for producing a semiconductor ceramic composition according to an embodiment of the present invention, the oxide containing Ba and Ti may be added in an amount of 0.1 mol% to 1.0 mol%, in terms of $Ba_6Ti_{17}O_{40}$, based on the entire raw material (including the oxide containing Ba and Ti) of the semiconductor ceramic composition.

The oxide containing Ba and Ti is appropriately incorporated, whereby a semiconductor ceramic composition having a high temperature coefficient of resistance can be stably obtained irrespective of the sintering temperature. If the amount added of the oxide containing Ba and Ti is less than 0.1 mol%, it may become difficult to stably obtain a lead-free semiconductor ceramic composition having a large temperature coefficient of resistance. Also, if the amount added of the oxide containing Ba and Ti exceeds 1.0 mol%, the room-temperature resistivity may be increased or the normalized withstand voltage may be decreased.

In the method for producing a semiconductor ceramic composition according to an embodiment of the present invention, the first and second raw materials may be mixed such that the semiconductor ceramic composition is represented by a composition formula of $[(BiA)_x(Ba_{1-y}R_y)_{1-x}][Ti_{1-z}M_z]O_3$ (wherein A is at least one kind of Na, Li and K, R is at least one kind of rare earth elements including Y, and M is at least one kind of Nb, Ta and Sb) in which x, y and z satisfy $0<x\leq0.2$, $0\leq y\leq0.05$ and $0\leq z\leq0.01$ (provided that $y+z>0$).

The method for producing a semiconductor ceramic composition according to an embodiment of the present invention is effective in producing a semiconductor ceramic composition having the above-described composition formula.

The method for producing a semiconductor ceramic composition according to one embodiment of the present invention is described below.

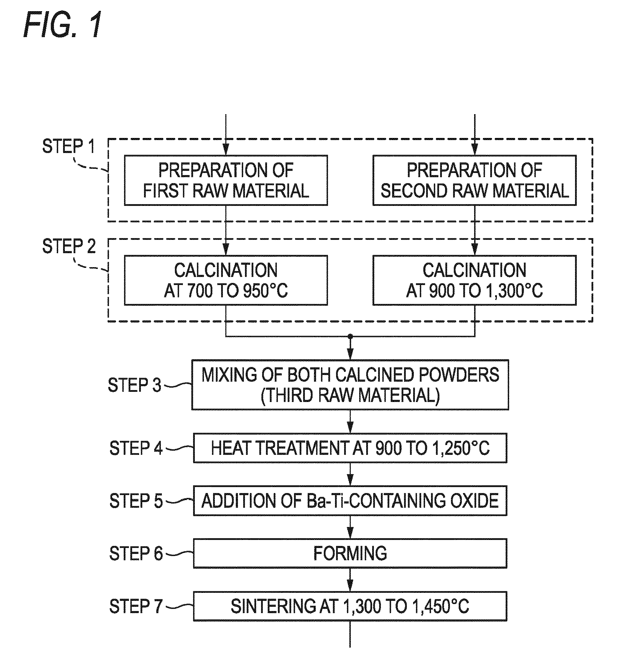

FIG. 1 is a view showing the outline of the method for producing a semiconductor ceramic composition according to an embodiment of the present invention. As shown in FIG. 1, the method for producing a semiconductor ceramic composition according to an embodiment of the present, which includes:

(Step 1) in which, as the raw material, a $(BiA)TiO_3$-based first raw material and a $(BaR)[TiM]O_3$-based second raw material are prepared respectively;
(Step 2) in which the first raw material at 700°C to 950°C and the second raw material at 900°C to 1,300°C are calcined;
(Step 3) in which respective calcined materials are mixed to prepare a third raw material;
(Step 4) in which the third raw material is heat-treated at 900°C to 1,250°C;
(Step 5) in which an oxide containing Ba and Ti, which becomes a liquid phase at 1,300°C to 1,450°C, is added;
(Step 6) in which the resulting material is formed; and
(Step 7) in which the formed material is sintered at a temperature of 1,300°C to 1,450°C.

Thus, the method for producing a semiconductor ceramic composition according to an embodiment of the present invention includes: (Step 1) in which a $(BiA)TiO_3$-based first raw material and a $(BaR)[TiM]O_3$-based second raw material are prepared, respectively; and (Step 2) in which the first raw material and the second raw material are calcined at different temperatures. According to this production process, vaporization of Bi can be inhibited, thereby preventing a compositional deviation of Bi-A and suppressing the production of a heterophase containing A, and the room-temperature resistivity can be reduced, whereby it is possible to suppress the variation of the Curie temperature. Each of (Step 1) and (Step 2) is described in detail below.

(Step 1) is described in detail. The (BiA)$TiO_3$-based first raw material means a raw material for forming a (BiA)$TiO_3$-based oxide. The (BiA)$TiO_3$-based first raw material is produced by mixing $A_2CO_3$, $Bi_2O_3$ and $TiO_2$ as raw material powders.

The (BaR)[TiM]$O_3$-based second raw material means a raw material for forming a (BaR)[TiM]$O_3$-based oxide. The (BaR)[TiM]$O_3$-based second raw material is produced by mixing $BaCO_3$, $TiO_2$ and raw material powders of semiconducting elements R and M, for example, an R element oxide such as $La_2O_3$ and an M element oxide such as $Nb_2O_5$.

In the step of (Step 1), at the time of mixing the raw material powders, both the first raw material and the second raw material may be subjected to pulverization according to the particle size of the raw material powder. Mixing of raw material powders may be either wet mixing using pure water or ethanol or dry mixing, but when dry mixing is performed, the compositional deviation can be more successfully prevented. Incidentally, different A compound, Bi compound and Ti compound other than $A_2CO_3$, $Bi_2O_3$, $TiO_2$ and the like may also be used as the first raw material. Similarly, different Ba compound and Ti compound other than $BaCO_3$, $TiO_2$ and the like may also be used as the second raw material.

Calcination of the (BiA)$TiO_3$-based first raw material of (Step 2) is described in detail.

The calcination temperature of the first raw material is from 700°C to 950°C. If the calcination temperature is less than 700°C, unreacted $A_2CO_3$ or $A_2O$ not reacted with Bi or Ti may react with water in the in-furnace atmosphere or in the case of wet mixing, with the solvent to generate heat, and the composition formula may deviate from the desired values, as a result, the PTC characteristics become unstable.

On the other hand, if the calcination temperature exceeds 950°C, vaporization of Bi proceeds to cause a compositional deviation and promote production of a heterophase.

The calcination time is preferably from 0.5 to 10 hours. If the calcination time is less than 0.5 hours, for the same reasons as in the case where the calcination temperature is less than 700°C, the obtained PTC characteristics are likely to become unstable. If the calcination temperature exceeds 10 hours, for the same reasons as in the case where the calcination temperature exceeds 950°C, production of a heterophase is readily promoted.

The calcination of the first raw material is preferably performed in the atmosphere.

If the composition formula of the second raw material is a composition formula where both R and M are not added, similarly to the composition formula described for the semiconductor ceramic composition, the room-temperature resistivity becomes large and therefore, at least one is preferably added.

Calcination of the (BaR)[TiM]$O_3$-based second raw material of (Step 2) is described in detail.

The calcination temperature of the second raw material is from 900°C to 1,300°C. If the calcination temperature is less than 900°C, a calcined body having a composition formula represented by (BaR)[TiM]$O_3$ is not completely formed, and BaO decomposed from $BaCO_3$ may partially react with water in the in-furnace atmosphere or remaining $BaCO_3$ may partially dissolve in water in the in-furnace atmosphere, which disadvantageously gives rise to a compositional deviation.

On the other hand, a calcination temperature exceeding 1,300°C is not preferred because mutual sintering occurs in a portion of the calcined powder to inhibit formation of a solid solution with a calcined powder of the (BiA)$TiO_3$-based first raw material that is mixed later.

The calcination time is preferably 0.5 hours or more. A calcination time of less than 0.5 hours gives rise to a compositional deviation.

The calcination of the second raw material is preferably performed in the atmosphere.

(Step 3) is described in detail.

Respective calcined powders are combined each in a predetermined amount and mixed to prepare a third raw material. Mixing may be either wet mixing using pure water or ethanol or dry mixing, but dry mixing is preferably performed because the compositional deviation can be more successfully prevented. Also, according to the particle size of the calcined powder, pulverization may be performed after mixing, or pulverization may be performed simultaneously with mixing. The average particle size of the calcined powder after mixing and pulverization is preferably from 0.5 $\mu$m to 7.0 $\mu$m, more preferably from 0.8 $\mu$m to 3.0 $\mu$m.

(Step 4) is described in detail.

In the production method according to an embodiment of the present invention, a step of (Step 4) heat-treating the third raw material at 900°C to 1,250°C may be provided after (Step 3). The heat treatment temperature is preferably a temperature at which both composition formulae are caused by this step to show diffraction peaks in X-ray diffraction at the same position, that is, enter a solid solution state. If the temperature is less than 900°C, Bi is not sufficiently diffused, and if the temperature exceeds 1,250°C, since the melting point of the (BiA)$TiO_3$-based powder is around 1,250°C, Bi evaporates into the in-furnace atmosphere. In order to prevent evaporation of Bi, the heat treatment is preferably performed at a low temperature, but if the temperature is too low, the heat treatment must be performed for a long time. The heat treatment temperature is more preferably from 1,000°C to 1,200°C.

The heat treatment time is preferably from 0.5 to 20 hours. If the time is less than 0.5 hours, a solid solution of the $(BaR)[TiM]O_3$-based calcined powder and the $(BiA)TiO_3$-based calcined powder is unstable, and the PTC characteristics are likely to be stabilized. On the other hand, if the time exceeds 20 hours, the vaporization amount of Bi increases, and a compositional deviation readily occurs. The heat treatment time is preferably from 1 to 12 hours, more preferably from 1.5 to 6 hours. The heat treatment of the third raw material is preferably performed in the atmosphere.

Incidentally, the step of (Step 4) may or may not be provided. In addition, the step of (Step 4) may also be performed after (Step 5).

(Step 5) is described in detail.

An oxide containing Ba and Ti, which becomes a liquid phase at 1,300°C to 1,450°C, is added to the third raw material. The oxide containing Ba and Ti is preferably added in an amount of 0.1 mol% to 1.0 mol% in terms of $Ba_6Ti_{17}O_{40}$ based on the entire raw material (including the oxide containing Ba and Ti) of the semiconductor ceramic composition. As described above, if the amount added of the oxide containing Ba and Ti is less than 0.1 mol%, a lead-free semiconductor ceramic composition having a large temperature coefficient of resistance is unlikely to be stably obtained. If the amount added of the oxide containing Ba and Ti exceeds 1.0 mol%, the room-temperature resistivity may be increased or the normalized withstand voltage may be decreased.

Also, the addition of the oxide containing Ba and Ti can be expected to produce an effect of raising the heat-resistant temperature or withstand voltage of the semiconductor ceramic composition.

In the calculation of mol% of the oxide containing Ba and Ti, the mol of each raw material of the $(BiA)TiO_3$-based first raw material, the $(BaR)[TiM]O_3$-based second raw material, the Y raw material and the oxide containing Ba and Ti is calculated, and the mol of the oxide containing Ba and Ti is calculated assuming that the sum total of the mols of all raw materials is 100%.

As the oxide containing Ba and Ti, oxides represented by the composition formulae of $Ba_6Ti_{17}O_{40}$, $BaTi_2O_5$, $Ba_4Ti_{13}O_{30}$, $BaTi_3O_7$, $BaTi_4O_9$, $Ba_2Ti_9O_{20}$ and $Ba_2TiO_5$ can be applied, and it is particularly preferred to use $Ba_6Ti_{17}O_{40}$.

Incidentally, it can be expected that an effect of further raising the heat-resistant temperature is produced by adding the oxide containing Ba and Ti of (Step 5) after the heat treatment of the third raw material of (Step 4).

Hereinafter, the oxide containing Ba and Ti is sometimes referred to as BaTi oxide.

In any one step of (Step 1) to (Step 5), an Si raw material in an amount of 3.0 mol% or less in terms of $SiO_2$ and a Ca raw material in an amount of 4.0 mol% or less in terms of CaO, based on the raw materials of the semiconductor ceramic composition, are preferably added. The Si raw material can inhibit the abnormal growth of crystal grain and at the same time, can facilitate the control of electrical resistivity, and the Ca raw material can enhance the low-temperature sinterability. As for both raw materials, if the material is added in an amount of more than the above-described limit amount, the composition may not exhibit semiconductivity.

(Step 6) is described in detail.

The raw material after the addition of BaTi oxide is formed. Before forming, the pulverized powder may be granulated in a granulating device, if desired. The compact density after forming is preferably from 2.5 to 3.5 g/cm$^3$.

(Step 7) is described in detail.

The sintering is performed at a sintering temperature of 1,300 to 1,450°C. If the sintering temperature is less than 1,300°C, sintering becomes insufficient. If the sintering temperature exceeds 1,450°C, the temperature coefficient of resistance may become small or the heat resistance may be reduced. The sintering temperature is preferably 1,420°C or less, more preferably 1,400°C or less.

The sintering is preferably performed in the atmosphere, in a reducing atmosphere, or in an inert gas atmosphere with a low oxygen concentration.

The sintering time is preferably from 1 to 10 hours. If the sintering time is less than 1 hour, sintering becomes insufficient. If the sintering time exceeds 10 hours, the Bi concentration within the crystal grain may be homogenized to reduce the temperature coefficient of resistance. The sintering time is more preferably from 2 to 6 hours.

By carrying out the sintering in an atmosphere having an oxygen concentration of 200 ppm or less, a semiconductor ceramic composition having a large temperature coefficient of resistance in a high temperature region (at the Curie temperature or more) can be obtained while keeping the room-temperature resistivity low. In general usage, a semiconductor ceramic composition having a room-temperature resistivity of 200 Ωcm or less is required.

On the other hand, by carrying out the sintering in an atmosphere having an oxygen concentration of 3,000 ppm or more, a semiconductor ceramic composition having a large temperature coefficient of resistance in a high temperature region (at the Curie temperature or more) can be obtained. In this case, the semiconductor ceramic composition has a high room-temperature resistivity of 10,000 Ωcm or more and can be used as a PTC heater for an electric car.

The obtained semiconductor ceramic composition is preferably a semiconductor ceramic composition represented by a composition formula of $[(BiA)_x(Ba_{1-y}R_y)_{1-x}][Ti_{1-z}M_z]O_3$ (A is at least one kind of Na, Li and K, R is at least one kind of rare earth elements including Y, and M is at least one kind of Nb, Ta and Sb) in which x, y and z satisfy $0<x\leq0.2$, $0\leq y\leq0.05$ and $0\leq z\leq0.01$ (provided that $y+z>0$).

In the composition formula above, the ratio between A site on the $[(BiA)_x(Ba_{1-y}R_y)_{1-x}]$ side and B site on the $[Ti_{1-z}M_z]$ side may be within the range of A site : B site = 0.9 to 1.1 : 1. The ratio is preferably A site : B site = 0.9 to 1.0 : 1, more preferably 0.990 to 1.000 : 1. An effect of reducing the change over time or an effect of enhancing the temperature coefficient $\alpha$ of resistance can be expected to be produced.

In the case where x is in the range of more than 0 and 0.2 or less, the Curie temperature can be from 130 to 200°C. If x exceeds 0.2, a heterophase is readily produced. A semiconductor ceramic composition where x=0 does not form a large interface resistance and therefore, a satisfactory effect of reducing the change over time can be hardly obtained.

In the case of a composition formula where both R and M are not added (y=z=0), the room-temperature resistivity becomes 200 Ωcm or more, and the efficiency as a heater element decreases. For this reason, y and z satisfy y+z>0. However, it is not necessary that both R and M are added as essential elements, but at least one thereof is preferably added.

When z=0, y of R is preferably a value in the range of $0<y\leq0.05$. If y is 0, the composition does not exhibit semiconductivity, whereas if the value exceeds 0.05, the room-temperature resistivity is likely to become large. The atomic valence can be controlled by changing the value of y. However, in the case of controlling the atomic valence of the composition in a system where a portion of Ba of the $BaTiO_3$-based oxide is substituted by Bi and A, if a trivalent cation is added as a semiconducting element, the semiconducting effect is reduced due to the presence of the monovalent A ion, and the room-temperature resistivity is readily increased, as a result, the room-temperature resistively is likely to become high. For this reason, the more preferable range is $0.002\leq y\leq0.02$. R is at least one or more elements selected from rare earths (Sc, Y, La, Ce, Pr, Nd, Pm, Sm, Eu, Gd, Tb, Dy, Ho, Tb, Tm, Yb, Lu), and among others, La is preferred, because excellent PTC characteristics are obtained.

When y=0, the preferable range of z indicating the M amount is $0<z\leq0.01$. If z is 0, the atomic valence cannot be controlled, failing in causing the composition to exhibit semiconductivity, whereas if z exceeds 0.01, the room-temperature resistivity may increase or the Curie temperature may be likely to drop. A more preferable range is $0.001\leq z\leq0.005$. Among others, M is preferably Nb, because excellent PTC characteristics are obtained.

The ratio of Bi and A may be 1:1, and the present invention encompasses a case where although the ratio at the time of combining the materials is 1:1, a deviation is caused in the ratio of Bi and A due to vaporization of Bi in the step of calcining or sintering Bi and the ratio is not 1:1 in the sintered body. The acceptable range is Bi:A = 0.78 to 1.55 : 1, and within this range, an increase in the heterophase can be suppressed, whereby it is possible to prevent the room-temperature resistivity from increasing or changing over time. A more preferable range is Bi:A = 0.90 to 1.2 : 1. As described later in Examples, an effect of enhancing the Curie temperature is obtained by setting the Bi/A ratio to be more than 1.

Incidentally, in the case of using the above-described Si raw material and Ca raw material, Si and Ca may be contained in the composition formula above.

In the present invention, the evaluations of temperature coefficient $\alpha$ of resistance, room-temperature resistivity $R_{25}$, change over time, heat-resistant temperature $T_L$, withstand voltage $V_0$, and normalized withstand voltage $V_L$ were performed by the following common methods.

(Temperature Coefficient $\alpha$ of Resistance)

The temperature coefficient $\alpha$ of resistance of the semiconductor ceramic composition was calculated by measuring the resistance-temperature characteristics while raising the temperature to 260°C in a constant temperature bath.

Incidentally, the temperature coefficient $\alpha$ of resistance is defined by the following formula:

$$\alpha=(\ln R_L-\ln R_C)\times100/(T_1-T_C).$$

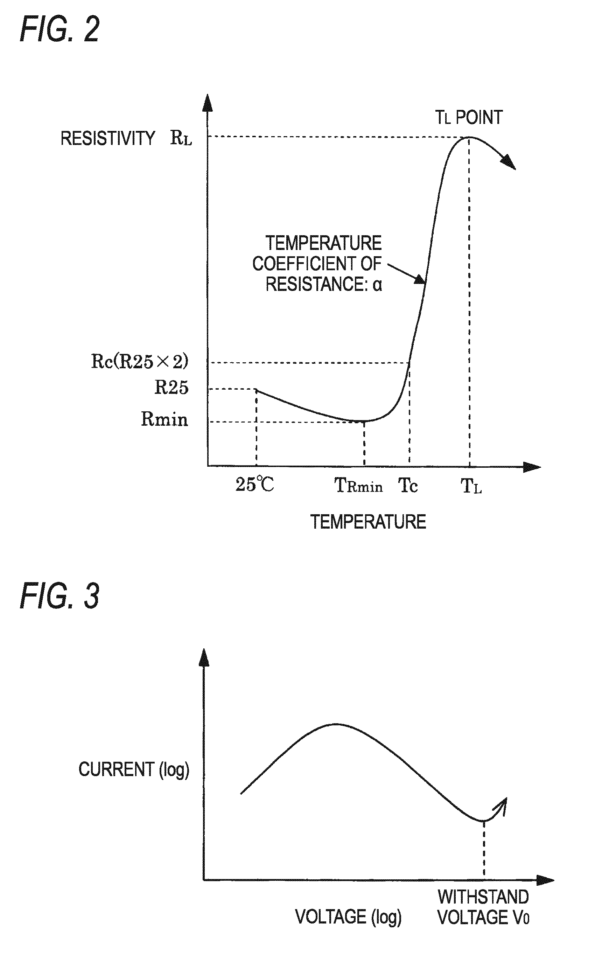

As shown in FIG. 2 (abscissa: temperature, ordinate (logarithmic expression): resistivity), $R_L$ is the maximum electrical resistivity, $T_L$ is the heat-resistant temperature showing $R_L$, $T_C$ is the Curie temperature, and $R_C$ is the electrical resistivity at $T_C$. Here, the Curie temperature $T_C$ is defined as a temperature at which the electrical resistivity becomes double the room-temperature resistivity $R_{25}$.

(Room-Temperature Resistivity $R_{25}$)

The room-temperature resistivity $R_{25}$ of the semiconductor ceramic composition was measured at 25°C by a four-terminal method. The unit was (Ωcm).

(Change Over Time)

The change over time was determined from the temporal change in the room-temperature resistivity. The semiconductor ceramic composition was incorporated into a heater with an aluminum fin, and a voltage of 13 V was applied for 500 hours while cooling the system at a wind velocity of 4 m/s. During electrification, the temperature of the semiconductor ceramic composition was adjusted by water cooling to fall in the range of 80 to 100°C. The room-temperature resistivity at 25°C after the electrification test was measured, and the difference in the room-temperature resistivity between before the electrification test and after the electrification for 500 hours was divided by the room-temperature resistivity before the electrification test to determine the rate of change in resistance (%), whereby the change over time was examined.
The rate of change over time is defined by the following formula:

$$\{(\text{room-temperature resistivity when electrified for 500 hours})-(\text{room-temperature resistivity before electrification test})\}/(\text{room-temperature resistivity before electrification test})\times 100\ (\%)$$

(Heat-Resistant Temperature $T_L$)

An electrode was formed on both surfaces of a plate-like semiconductor ceramic composition and by measuring the resistance value while raising the temperature in a heat treatment furnace, the value $T_L$ when the resistance takes a maximum value as shown in FIG. 2 was defined as the heat-resistant temperature.

(Withstand Voltage $V_0$ and Normalized Withstand Voltage $V_L$)

An electrode was formed on both surfaces of a plate-like semiconductor ceramic composition, and a voltage value when the current takes a minimum value as shown in FIG. 3 was measured. Thereafter, the voltage value was divided by the thickness (unit: mm) of the plate-like semiconductor ceramic composition, and the obtained value was defined as the withstand voltage ($V_0$). Furthermore, this withstand voltage ($V_0$) was divided by the above-described room-temperature resistivity $R_{25}$ (Ωcm), and the obtained value was defined as the normalized withstand voltage ($V_L$). Incidentally, the voltage value was measured using a measuring instrument (Model No. PSF800H) manufactured by Nikke Techno System.

(Example 1)

As shown in FIG. 1, a $(BiA)TiO_3$-based first raw material and a $(BaR)[TiM]O_3$-based second raw material were prepared respectively as the raw material (Step 1). In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})TiO_3$, and then mixed using pure water.
The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,100°C for 4 hours in the atmosphere to prepare a $(BaR)[TiM]O_3$-based calcined powder.
Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_3$. The mixed raw material was mixed and pulverized in a pot mill by using pure water as the medium until the average particle diameter became from 0.8 μm to 3.0 μm, and then dried to prepare a third raw material.
The third raw material was then heat-treated at 900°C to 1,250°C (Step 4). In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder. The heat treatment temperature was set to a temperature at which respective diffraction lines of the $(BiA)TiO_3$-based calcined

powder and the (BaR)[TiM]$O_3$-based calcined powder become one line in the X-ray diffraction.

Subsequently, an oxide containing Ba and Ti, which becomes a liquid phase at 1,300°C to 1,450°C, was added to the heat-treated third raw material (Step 5). In this Example, the addition was performed under the following conditions. Materials where $Ba_6Ti_{17}O_{40}$ was added in amounts of 0.29 mol%, 0.37 mol%, 0.44 mol%, 0.51 mol% and 0.59 mol%, respectively, based on the entire raw material (($Bi_{0.5}Na_{0.5}$)$TiO_3$, ($Ba_{0.994}La_{0.006}$)$TiO_3$, $Ba_6Ti_{17}O_{40}$, $Y_2O_3$) of the semiconductor ceramic composition were prepared.

Also, $Y_2O_3$ was added in an amount of 0.4 mol% based on the entire raw material of the semiconductor ceramic composition.

Thereafter, the mixture was formed (Step 6). In this Example, PVA was added and mixed to the mixture of the third raw material, BaTi oxide and $Y_2O_3$, and then granulated. The granulated powder obtained was formed on a monoaxial pressing apparatus to form a plate of 15 mm × 15 mm × 3.4 mm and subjected to binder removal at 700°C.

Furthermore, the formed powder was sintered in the temperature region of 1,300°C to 1,450°C (Step 7). In this Example, the sintering was performed under the following conditions. The formed powder was sintered by holding it at 1,320 to 1,420°C for 4 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

The relationship among the amount added of BaTi oxide, the sintering temperature and the temperature coefficient $\alpha$ of resistance was examined.

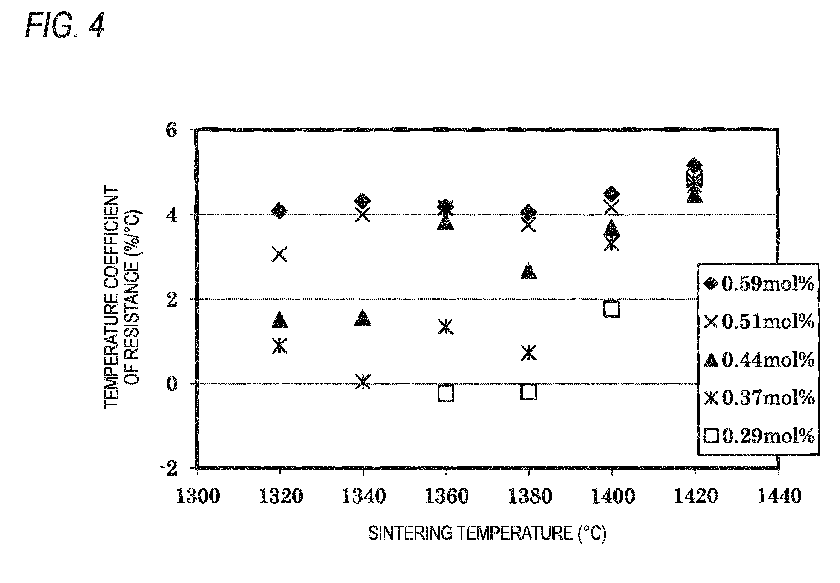

FIG. 4 shows the relationship between the sintering temperature and the temperature coefficient $\alpha$ of resistance.

As shown in FIG. 4, at a sufficiently high sintering temperature of 1,440°C, a semiconductor ceramic composition having a high temperature coefficient $\alpha$ of resistance is obtained irrespective of the amount added of the oxide containing Ba and Ti, and as the sintering temperature drops, the temperature coefficient $\alpha$ of resistance is decreased. However, FIG. 4 shows that as the amount added of the oxide containing Ba and Ti is increased, the reduction in the temperature coefficient $\alpha$ of resistance is slowed down.

In this way, the present inventors have found that by the addition of an oxide containing Ba and Ti, a semiconductor ceramic composition having a high temperature coefficient $\alpha$ of resistance is obtained even at a low sintering temperature. According to the production method in an embodiment of the present invention, even when a variation occurs in the temperature distribution within a sintering furnace and a portion of the semiconductor ceramic composition is sintered at a temperature lower than the desired temperature, a semiconductor ceramic composition having a high temperature coefficient $\alpha$ of resistance is obtained.

Also, as seen from the results in FIG. 4, by adding the oxide containing Ba and Ti in an amount of at least 0.5 mol% or more, the temperature coefficient $\alpha$ of resistance can be more effectively prevented from decreasing due to the sintering temperature.

In addition, by such addition of an oxide containing Ba and Ti, a semiconductor ceramic composition having a high temperature coefficient $\alpha$ of resistance is obtained even at a low sintering temperature, so that the sintering temperature of the semiconductor ceramic composition can be set low. When the sintering temperature is set high, a high temperature coefficient $\alpha$ of resistance can be obtained, but Bi is readily vaporized and the composition formula of the semiconductor ceramic composition is likely to vary. However, according to the production method in an embodiment of the present invention, even when the sintering temperature is set low, a semiconductor ceramic composition having a high temperature coefficient $\alpha$ of resistance and at the same time, undergoing less variation in the composition formula is obtained. Incidentally, the temperature coefficient $\alpha$ of resistance is preferably 3.5% or more, because the characteristics required as a PTC element can be substantially satisfied.

Also, when the same test was performed for a composition formula where Na is substituted by Li or K, evaluation results having the same tendency as in FIG. 4 were obtained. In addition, even when $BaTi_2O_5$, $Ba_4Ti_{13}O_{30}$, $BaTi_3O_7$, $BaTi_4O_9$, $Ba_2Ti_9O_{20}$ or $BaTiO_5$ was used as the BaTi oxide, evaluation results having the same tendency were obtained.

(Example 2)

The relationship between the sintering time and the temperature coefficient $\alpha$ of resistance was examined. The results obtained are shown as Samples 1-1 to 1-3 in Table 1.

As shown in FIG. 1, a (BiA)$TiO_3$-based first raw material and a (BaR)[TiM]$O_3$-based second raw material were prepared respectively as the raw material (Step 1). In this Example, raw material powders of $Na_2CO_3$, $Bi_2O_3$ and $TiO_2$ were prepared as the (BiA)$TiO_3$-based first raw material, combined to provide ($Bi_{0.5}Na_{0.5}$)$TiO_3$ where the molar ratio Bi/Na of Bi and Na is 1.0, and then dry mixed. Also, raw material powders of $BaCO_3$, $TiO_2$ and $La_2O_3$ were prepared as the (BaR)[TiM]$O_3$-based second raw material, combined to provide ($Ba_{0.994}La_{0.006}$)$TiO_3$, and then mixed using pure water.

The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,200°C for 4 hours in the atmosphere to prepare a $(BaR)[TiM]O_3$-based calcined powder.

Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_5$. The resulting raw material was mixed and pulverized in a pot mill by using pure water as the medium until the average particle diameter became from 0.8 μm to 3.0 μm, and then dried to prepare a third raw material.

The third raw material was then heat-treated at 900°C to 1,250°C (Step 4). In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder. The heat treatment temperature was set to a temperature at which respective diffraction lines of the $(BiA)TiO_3$-based calcined powder and the $(BaR)[TiM]O_3$-based calcined powder become one line in the X-ray diffraction.

Subsequently, an oxide containing Ba and Ti, which becomes a liquid phase at 1,300°C to 1,450°C, was added to the heat-treated third raw material (Step 5). In this Example, the addition was performed under the following conditions. $Ba_6Ti_{17}O_{40}$ was added in an amount of 0.29 mol% based on the entire raw material of the semiconductor ceramic composition.

Also, $Y_2O_3$ was added in an amount of 0.99 mol% based on the entire raw material of the semiconductor ceramic composition.

Thereafter, the mixture was formed (Step 6). In this Example, PVA was added and mixed to the mixture of the third raw material, BaTi oxide and $Y_2O_3$, and then granulated. The granulated powder obtained was formed on a monoaxial pressing apparatus to form a plate of 15 mm × 15 mm × 3.4 mm and subjected to binder removal at 700°C.

Furthermore, the formed powder was sintered in the temperature region of 1,300°C to 1,450°C (Step 7). In this Example, the sintering was performed under the following conditions. The formed powder was sintered by holding it at 1,420°C as shown in Table 1 for 1 hour, 4 hours or 8 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

The measured results of room-temperature resistivity $R_{25}$, temperature coefficient α of resistance, Curie temperature $T_C$, change over time, heat-resistant temperature $T_L$, withstand voltage $V_0$ and normalized withstand voltage $V_L$ are shown in Table 1.

Table 1

| No. | Sintering Temperature (°C) | Sintering Time (hr) | $Ba_6Ti_{17}O_{40}$ (mol%) | $Y_2O_3$ (mol%) | Amount of $(BiNa)TiO_3$ x | Room-Temperature Resistivity $R_{25}$ (Ωcm) |
|---|---|---|---|---|---|---|
| 1-1 | 1420 | 1 | 0.29 | 0.99 | 0.085 | 67.9 |
| 1-2 | 1420 | 4 | 0.29 | 0.99 | 0.085 | 54.8 |
| 1-3 | 1420 | 8 | 0.29 | 0.99 | 0.085 | 23.5 |

Table 1 (Continued)

| No. | Temperature Coefficient α of Resistance (%/°C) | Curie Temperature $T_C$ (°C) | Change Over Time (%) | Heat-Resistant Temperature $T_L$ (°C) | Withstand Voltage $V_0$ (V) | Normalized Withstand Voltage $V_L$ ($V_0/R_{25}$) |
|---|---|---|---|---|---|---|
| 1-1 | 7.45 | 153.1 | 140.0 | 468 | 493 | 7.3 |
| 1-2 | 6.08 | 155 | 7.8 | 467 | 454 | 8.3 |
| 1-3 | 4.22 | 158.4 | (not measured) | 493 | 355 | 15.1 |

As seen from the results of Example 2, by virtue of adding an oxide containing Ba and Ti, a semiconductor ceramic composition having a large temperature coefficient of resistance could be obtained even when the sintering time was 1 hour. This result reveals that according to the production method in an embodiment of the present invention, even when the sintering time is shortened, a semiconductor ceramic composition having a large temperature coefficient α of resistance is obtained, whereby it is possible to provide a semiconductor ceramic composition having a large temperature coefficient α of resistance while reducing the production cost.

(Example 3)

The relationship between the ratio of Bi to Na and the PTC characteristics was examined. The results obtained are shown as 2-1 to 2-7 in Table 2.

As shown in FIG. 1, a $(BiA)TiO_3$-based first raw material and a $(BaR)[TiM]O_3$-based second raw material were prepared respectively as the raw material (Step 1). In this Example, raw material powders of $Na_2CO_3$, $Bi_2O_3$ and $TiO_2$ were prepared as the $(BiA)TiO_3$-based first raw material, combined such that in the $(BiA)TiO_3$-based composition formula, the molar ratio of Bi to A (in Example 3, Na) becomes the value shown in the column of Bi/Na Ratio in Table 2, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})TiO_3$, and then mixed using pure water.

The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,200°C for 4 hours in the atmosphere to prepare a $(BaR)[TiM]O_3$-based calcined powder.

Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_3$. The mixed raw material was mixed and pulverized in a pot mill by using pure water as the medium until the average particle diameter became from 0.8 μm to 3.0 μm, and then dried to prepare a third raw material.

The third raw material was then heat-treated at 900°C to 1,250°C (Step 4). In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder. The heat treatment temperature was set to a temperature at which respective diffraction lines of the $(BiA)TiO_3$-based calcined powder and the $(BaR)[TiM]O_3$-based calcined powder become one line in the X-ray diffraction.

Subsequently, an oxide containing Ba and Ti, which becomes a liquid phase at 1,300°C to 1,450°C, was added to the heat-treated third raw material (Step 5). In this Example, the addition was performed under the following conditions. Materials where $Ba_6Ti_{17}O_{40}$ was added in amounts of, as shown in Table 2, 0.29 mol%, 0.79 mol% and 0.94 mol%, respectively, based on the entire raw material of the semiconductor ceramic composition were prepared.

Also, $Y_2O_3$ was added in an amount of 1.47 mol% based on the entire raw material of the semiconductor ceramic composition.

Thereafter, the mixture was formed (Step 6). In this Example, PVA was added and mixed to the mixture of the third raw material, BaTi oxide and $Y_2O_3$, and then granulated. The granulated powder obtained was formed on a monoaxial pressing apparatus to form a plate of 15 mm × 15 mm × 3.4 mm.

Furthermore, the formed powder was sintered in the temperature region of 1,300°C to 1,450°C (Step 7). In this Example, the sintering was performed under the following conditions. The compact was subjected to binder removal at 700°C and then sintered by holding it, as shown in Table 2, at 1,400°C or 1,420°C for 4 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

The measured results of room-temperature resistivity $R_{25}$, temperature coefficient $\alpha$ of resistance, Curie temperature $T_C$, heat-resistant temperature $T_L$, withstand voltage $V_0$ and normalized withstand voltage $V_L$ are shown in Table 2.

Table 2

| No. | Sintering Temperature (°C) | Sintering Time (hr) | $Ba_6Ti_{17}O_{40}$ (mol%) | $Y_2O_3$ (mol%) | Amount of $(BiNa)TiO_3$ x | Room-Temperature Resistivity $R_{25}$ (Ωcm) |
|---|---|---|---|---|---|---|
| 2-1 | 1400 | 4 | 0.79 | 1.47 | 0.085 | 118.5 |
| 2-2 | 1400 | 4 | 0.79 | 1.47 | 0.085 | 24.2 |
| 2-3 | 1400 | 4 | 0.94 | 1.47 | 0.085 | 141.6 |
| 2-4 | 1400 | 4 | 0.94 | 1.47 | 0.085 | 16.8 |
| 2-5 | 1420 | 4 | 0.29 | 1.48 | 0.085 | 33.7 |
| 2-6 | 1420 | 4 | 0.29 | 1.47 | 0.085 | 26.5 |
| 2-7 | 1400 | 4 | 0.29 | 1.47 | 0.085 | 24.2 |

Table 2 (Continued)

| No. | Temperature Coefficient α of Resistance (%/°C) | Curie Temperature $T_C$ (°C) | Heat-Resistant Temperature $T_L$ (°C) | Withstand Voltage $V_0$ (V) | Normalized Withstand Voltage $V_L$ ($V_0/R_{25}$) | Bi/Na Ratio |
|---|---|---|---|---|---|---|
| 2-1 | 5.37 | 152.0 | 455 | 468 | 3.9 | 0.500:0.500 |
| 2-2 | 5.57 | 161.6 | 506 | 496 | 20.5 | 0.512:0.488 |
| 2-3 | 5.32 | 149.7 | 478 | 480 | 3.4 | 0.500:0.500 |
| 2-4 | 5.08 | 159.1 | 489 | 485 | 28.9 | 0.524:0.476 |
| 2-5 | 4.80 | 158.7 | 492 | 485 | 14.4 | 0.500:0.500 |
| 2-6 | 4.27 | 161.6 | 458 | 450 | 17.0 | 0.524:0.476 |
| 2-7 | 4.54 | 166.6 | 456 | 463 | 19.1 | 0.512:0.488 |

Table 2 shows the measured results of semiconductor ceramic compositions produced under the same conditions except that in No. 2-1, the Bi/Na ratio was 0.500:0.500 and in No. 2-2, the Bi/Na ratio was 0.512:0.488. The Curie temperature $T_C$ was higher in the sample where the Bi/Na ratio is 0.512:0.488, than in the sample where the Bi/Na ratio is 0.500:0.500. Similarly, comparison between No. 2-3 and No. 2-4, and comparison between No. 2-5 and No. 2-6 reveal the same tendency, verifying that a high Curie temperature $T_C$ can be achieved by a composition formula where the Bi amount is larger than the Na amount.

In No. 2-1 and No. 2-7, the Bi/Na ratio is the same but the amount added of the BaTi oxide is different. The temperature coefficient of resistance (5.37%/°C) of No. 2-1 where the amount added of the BaTi oxide is 0.79 mol% was larger than the temperature coefficient of resistance (4.54%/°C) of No. 2-7 where the amount added of the Ba-Ti oxide is 0.29 mol%.

As regards Nos. 2-1 to 2-4 where the amount added of $Ba_6Ti_{17}O_{40}$ is large, compared with Nos. 2-1 and 2-3 using a first raw material where the Bi/Na ratio is 0.500:0.500, the room-temperature resistivity $R_{25}$ was small in No. 2-2 where the Bi/Na ratio is 0.512:0.488 and in No. 2-4 where the Bi/Na ratio is 0.524:0.476. As long as the amount added of $Ba_6Ti_{17}O_{40}$ is 0.70% or more, a semiconductor ceramic composition having a small room-temperature resistivity $R_{25}$ can be obtained by using a first raw material where the amount of Bi is thus increased relative to Na.

(Example 4)

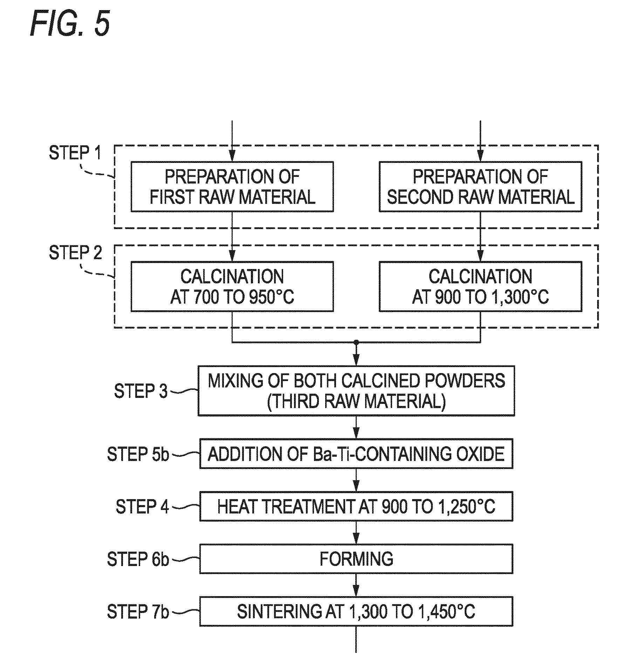

In Examples 1 to 3 above, as shown in FIG. 1, the BaTi oxide was added after the heat treatment of the third raw material. Here, in Example 4, the addition of the BaTi oxide was performed before heat-treating the third raw material. The results obtained are shown as Sample 3 in Table 3. FIG. 5 is a schematic diagram showing the production method used in Example 4.

As shown in FIG. 5, a $(BiA)TiO_3$-based first raw material and a $(BaR)[TiM]O_3$-based second raw material were prepared respectively as the raw material (Step 1). In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})TiO_3$, and then mixed using pure water.

The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,100°C for 4 hours in the atmosphere to prepare a $(BaR)[TiM]O_3$-based calcined powder.

Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_5$. The mixed raw material was mixed and pulverized in a pot mill by using pure water as the medium until the average particle diameter became from 0.8 μm to 3.0 μm, and then dried to prepare a third raw material.

An oxide containing Ba and Ti, which becomes a liquid phase at 1,300°C to 1,450°C, was added to the third raw material (Step 5b). In this Example, the addition was performed under the following conditions. A material where $Ba_6Ti_{17}O_{40}$ was added in an amount of 0.70 mol% based on the entire raw material of the semiconductor ceramic composition was prepared.

The mixture of the third raw material and $Ba_6Ti_{17}O_{40}$ was then heat-treated at 900°C to 1,250°C (Step 4b). In this Example, the heat treatment was performed under the following conditions. The mixture of the third raw material and $Ba_6Ti_{17}O_{40}$ was heat-treated at 1,150°C for 4 hours in the atmosphere so as to react the $(BiA)TiO_3$-based calcined powder and the $(BaR)[TiM]O_3$-based calcined powder.

Also, $Y_2O_3$ was added in an amount of 1.50 mol% based on the entire raw material of the semiconductor ceramic composition.

Thereafter, the mixture was formed (Step 6b). In this Example, PVA was added and mixed to the mixture of the third raw material, BaTi oxide and $Y_2O_3$, and then granulated. The granulated powder obtained was formed on a monoaxial pressing apparatus to form a plate of 15 mm × 15 mm × 3.4 mm and subjected to binder removal at 700°C.

Furthermore, the formed powder was sintered in the temperature region of 1,300°C to 1,450°C (Step 7b). In this Example, the sintering was performed under the following conditions. The formed powder was sintered by holding it at 1,420°C for 4 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

The measured results of room-temperature resistivity $R_{25}$, temperature coefficient $\alpha$ of resistance, Curie temperature $T_C$, heat-resistant temperature $T_L$, withstand voltage $V_0$ and normalized withstand voltage $V_L$ are shown in Table 3. The heat-resistant temperature $T_L$ was 480°C, the withstand voltage $V_0$ was 420°C, the normalized withstand voltage ($V_0/R_{25}$) was 4.0, and thus, a semiconductor ceramic composition having a high normalized withstand voltage was obtained.

Also, when a test was performed in the same manner as in Example 1 by changing the amount of the BaTi oxide, evaluation results having the same tendency as in FIG. 4 were obtained.

According to Examples 1 and 4, it was confirmed that the oxide containing Ba and Ti may be added before heat-treating the third raw material or the oxide containing Ba and Ti may be added after heat-treating the third raw material.

Incidentally, in Example 4, as described above, the first raw material and the second raw material were mixed to obtain a third raw material and thereafter, the oxide containing Ba and Ti was added to the third raw material, but even when the oxide containing Ba and Ti was mixed together with the first raw material and the second raw material, evaluation results having the same tendency as in FIG. 4 were obtained.

Table 3

| No. | Sintering Temperature (°C) | Sintering Time (hr) | $Ba_6Ti_{17}O_{40}$ (mol%) | $Y_2O_3$ (mol%) | Amount of $(BiNa)TiO_3$ x | Room-Temperature Resistivity $R_{25}$ (Ωcm) |
|---|---|---|---|---|---|---|
| 3 | 1420 | 4 | 0.70 | 1.50 | 0.085 | 105.3 |
| 4 | 1420 | 4 | 0 | 1.50 | 0.085 | 54.8 |

Table 3 (Continued)

| No. | Temperature Coefficient $\alpha$ of Resistance (%/°C) | Curie Temperature $T_C$ (°C) | Heat-Resistant Temperature $T_L$ (°C) | Withstand Voltage $V_0$ (V) | Normalized Withstand Voltage $V_L$ ($V_0/R_{25}$) |
|---|---|---|---|---|---|
| 3 | 4.69 | 152.4 | 480 | 420 | 4.0 |
| 4 | 4.67 | 157.7 | 346 | 275 | 5.0 |

(Comparative Example 1)

A semiconductor ceramic composition was produced without adding the BaTi oxide. The results obtained are shown as Sample 4 in Table 3 above.

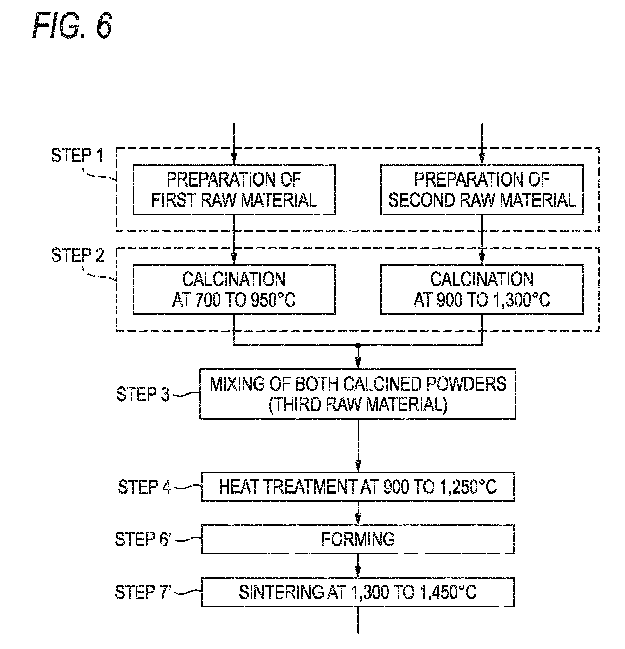

FIG. 6 is a schematic diagram showing the production method for producing the semiconductor ceramic composition of Comparative Example 1. As shown in FIG. 6, a $(BiA)TiO_3$-based first raw material and a $(BaR)[TiM]O_3$-based second raw material were prepared respectively as the raw material (Step 1). In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})_{0.936}TiO_3$, and then mixed using pure water.

The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,100°C for 4 hours in the atmosphere to prepare a $(BaR)[TiM]O_3$-based calcined powder.

Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed in a ratio of 0.915 mol% : 0.085 mol%. The resulting raw material was mixed and pulverized in a pot mill by using pure water as the medium until the average particle diameter became from 0.8 μm to 3.0 μm, and

then dried to prepare a third raw material.

The third raw material was then heat-treated at 900°C to 1,250°C (Step 4). In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder.

Also, $Y_2O_3$ was added in an amount of 1.50 mol% based on the entire raw material of the semiconductor ceramic composition.

Thereafter, the mixture was formed (Step 6'). In this Example, PVA was added and mixed to the mixture of the third raw material and $Y_2O_3$, and then granulated. The granulated powder obtained was formed on a monoaxial pressing apparatus to form a plate of 15 mm × 15 mm × 3.4 mm and subjected to binder removal at 700°C.

Furthermore, the formed powder was sintered in the temperature region of 1,300°C to 1,450°C (Step 7'). In this Example, the sintering was performed under the following conditions. The formed powder was sintered by holding it at 1,420°C for 4 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

Sample 4 in Table 3 obtained by the method of Comparative Example 1 has a low heat-resistant temperature $T_L$ of 346°C and therefore, can be hardly used under high temperature, for example, on the periphery of engine in automotive application.

(Example 5)

A semiconductor ceramic composition was produced by the process where a BaTi oxide is added and a heat treatment is not performed.

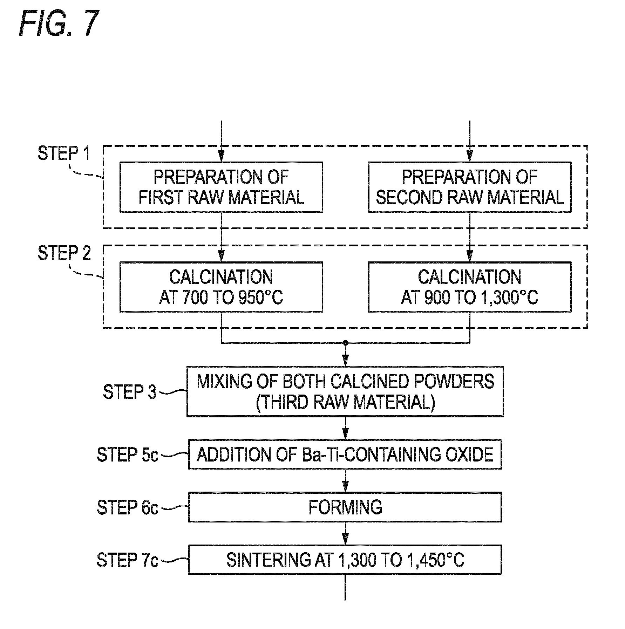

FIG. 7 is a schematic diagram showing the production method for the semiconductor ceramic composition of Example 5. As shown in FIG. 7, a $(BiA)TiO_3$-based first raw material and a $(BaR)[TiM]O_3$-based second raw material were prepared respectively as the raw material (Step 1). In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})TiO_3$, and then mixed using pure water.

The first raw material was calcined at 700°C to 950°C, and the second raw material was calcined at 900°C to 1,300°C (Step 2). In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,100°C for 4 hours in the atmosphere to prepare a $(BaR)[TiM]O_3$-based calcined powder.

Respective calcined raw materials were mixed to prepare a third raw material (Step 3). In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_3$. The resulting raw material was mixed and pulverized in a pot mill by using pure water as the medium until the average particle diameter became from 0.8 $\mu$m to 3.0 $\mu$m, and then dried to prepare a third raw material.

An oxide containing Ba and Ti, which becomes a liquid phase at 1,300°C to 1,450°C, was added to the third raw material (Step 5c). In this Example, the addition was performed under the following conditions. A material where $Ba_6Ti_{17}O_{40}$ was added in an amount of 0.70 mol% based on the entire raw material of the semiconductor ceramic composition was prepared.

Thereafter, the mixture was formed (Step 6c). In this Example, PVA was added and mixed to the mixture of the third raw material and the BaTi oxide, and then granulated. The granulated powder obtained was formed on a monoaxial pressing apparatus to form a plate of 15 mm × 15 mm × 3.4 mm and subjected to binder removal at 700°C.

Furthermore, the formed powder was sintered in the temperature region of 1,300°C to 1,450°C (Step 7c). In this Example, the sintering was performed under the following conditions. The formed powder was sintered by holding it at 1,420°C for 4 hours in nitrogen under the condition of an oxygen concentration of 70 ppm to obtain a sintered body.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes.

The measured results of room-temperature resistivity $R_{25}$, temperature coefficient $\alpha$ of resistance, Curie temperature $T_C$, heat-resistant temperature $T_L$, withstand voltage $V_0$ and normalized withstand voltage $V_L$ are shown in Table 4 (No. 5). The heat-resistant temperature $T_L$ was 451°C, the withstand voltage Vo was 397°C, the normalized withstand voltage $(V_0/R_{25})$ was 1.9.

Also, when a test was performed in the same manner as in Example 1 by changing the amount of the BaTi oxide, evaluation results having the same tendency as in FIG. 4 were obtained.

Table 4

| No. | Sintering Temperature (°C) | Sintering Time (hr) | $Ba_6Ti_{17}O_{40}$ (mol%) | $Y_2O_3$ (mol%) | Amount of $(BiNa)TiO_3$ x | Room-Temperature Resistivity $R_{25}$ (Ωcm) |
|---|---|---|---|---|---|---|
| 5 | 1420 | 4 | 0.70 | 0.00 | 0.085 | 213.4 |

Table 4 (Continued)

| No. | Temperature Coefficient α of Resistance (%/°C) | Curie Temperature $T_C$ (°C) | Heat-Resistant Temperature $T_L$ (°C) | Withstand Voltage $V_0$ (V) | Normalized Withstand Voltage $V_L$ ($V_0/R_{25}$) |
|---|---|---|---|---|---|
| 5 | 7.63 | 153.8 | 451 | 397 | 1.9 |

(Example 6)

The effect of the oxygen concentration in the atmosphere during sintering on the room-temperature resistivity $R_{25}$ was examined.

A $(BiA)TiO_3$-based first raw material and a $(BaR)[TiM]O_3$-based second raw material were prepared as the raw material. In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$, $TiO_2$ and $La_2O_3$ were prepared as the $(BaR)[TiM]O_3$-based second raw material, combined to provide $(Ba_{0.994}La_{0.006})TiO_3$, and then mixed using pure water.

The first raw material was calcined at 700°C to 950°C, and the second raw material was calcined at 900°C to 1,300°C. In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,200°C for 4 hours in the atmosphere to prepare a $(BaR)[TiM]O_3$-based calcined powder.

Respective calcined materials were mixed to prepare a third raw material. In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}La_{0.006})_{0.915}]TiO_5$. This material was mixed and pulverized in a pot mill by using pure water as the medium until the average particle diameter became from 2.0 μm to 3.0 μm, and then dried to prepare a third raw material.

The third raw material was heat-treated at 900°C to 1,250°C. In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder. The heat treatment temperature was set to a temperature at which respective diffraction lines of the $(BiA)TiO_3$-based calcined powder and the $(BaR)[TiM]O_3$-based calcined powder become one line in the X-ray diffraction.

Subsequently, $Ba_6Ti_{17}O_{40}$ and $Y_2O_3$ were added in an amount of 0.72 mol% and 1.47 mol%, respectively, based on the entire raw material of the semiconductor ceramic composition.

Thereafter, the mixture was formed. In this Example, the forming was performed under the following conditions. PVA was added and mixed, and then granulated. The granulated powder obtained was formed into a plate of 15 mm × 15 mm × 3.4 mm by a monoaxial pressing apparatus and subjected to binder removal at 700°C.

Furthermore, the formed powder was sintered. In this Example, the sintering was performed under the following conditions. The formed powder was sintered by holding it at 1,420°C for 4 hours in nitrogen and varying the oxygen concentration to 70 ppm, 150 ppm, 200 ppm, 890 ppm, 4,000 ppm and 7,000 ppm.

The sintered body obtained was processed into a plate of 10 mm × 10 mm × 1.0 mm to produce a test piece, an ohmic electrode was coated thereon, a cover electrode was further coated, and drying at 180°C and then baking at 600°C for a holding time of 10 minutes were performed to form electrodes. The sample obtained by the production method of Example 6 was measured for the room-temperature resistivity $R_{25}$.

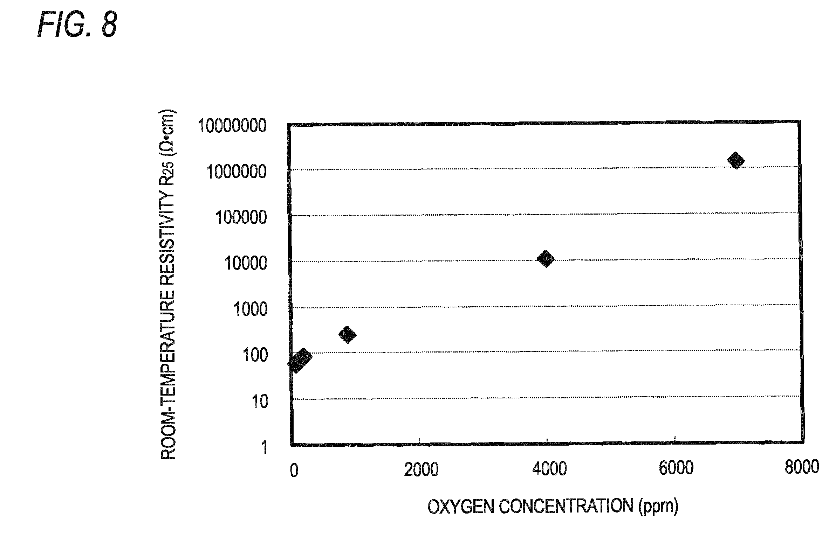

FIG. 8 is a view showing the relationship between the oxygen concentration and the room-temperature resistivity $R_{25}$ of the composition obtained in Example 6. As shown in FIG. 8, the room-temperature resistivity $R_{25}$ can be adjusted by increasing the oxygen concentration during sintering. Also, all semiconductor ceramic compositions obtained by the production method of Example 6 have a Curie temperature $T_C$ of 150°C or more. The temperature coefficient α of resistance of the semiconductor ceramic composition sintered by setting the oxygen concentration to 4,000 ppm was 3.75%/°C. In all of the semiconductor ceramic compositions sintered with a lower oxygen concentration than that, the temperature coefficient $\alpha$ of resistance was 4.50%/°C or more.

However, in the case of the semiconductor ceramic composition sintered with an oxygen concentration of 7,000 ppm, the temperature coefficient $\alpha$ of resistance was 0.39%/°C. It is presumed that as long as a practical semiconductor ceramic composition is intended to obtain, a composition having a sufficiently large temperature coefficient $\alpha$ of resistance is obtained with an oxygen concentration of 5,000 ppm or less.

In all semiconductor ceramic compositions obtained in this Example, the change over time was 50% or less, the heat-resistant temperature was 350°C or less, the withstand voltage was 350 V or less, and the normalized withstand voltage was 3.0 or more.

(Example 7)

The composition formula of the semiconductor ceramic composition of the present invention was formulated as a composition formula where La is substituted by another rare earth, and its effect on characteristics was examined.

A $(BiA)TiO_3$-based first raw material and a $(BaR)[TiM]O_3$-based second raw material were prepared respectively as the raw material. In this Example, raw material powders of $Na_2CO_3$, $Bi_2O_3$ and $TiO_2$ were prepared as the $(BiA)TiO_3$-based first raw material, combined to provide $(Bi_{0.5}Na_{0.5})TiO_3$ where the molar ratio Bi/Na of Bi and Na is 1.0, and then dry mixed. Also, raw material powders of $BaCO_3$ and $TiO_2$ as well as $Ho_2O_3$, $Y_2O_3$, $Er_2O_3$, $Tm_2O_3$, $Yb_2O_3$, $Lu_2O_3$ and $Sc_2O_3$ which are rare earth raw materials, were prepared as the $(BaR)[TiM]O_3$-based second raw material, combined to provide $(Ba_{0.994}R_{0.006})TiO_3$ by varying the rare earth added, and then mixed using pure water.

The first raw material was calcined at 700°C to 950°C, and the second raw material was calcined at 900°C to 1,300°C. In this Example, the calcination was performed under the following conditions. The obtained first raw material was calcined at 800°C for 2 hours in the atmosphere to prepare a $(BiA)TiO_3$-based calcined powder. Also, the second raw material was calcined at 1,200°C for 4 hours in the atmosphere to prepare a $(BaR)[TiM]O_3$-based calcined powder.

Respective calcined materials were mixed to prepare a third raw material. In this Example, the mixing was performed under the following conditions. The $(BiA)TiO_3$-based calcined powder and the $(BaR)[TiM]O_3$-based calcined powder were mixed to provide $[(Bi_{0.5}Na_{0.5})_{0.085}(Ba_{0.994}R_{0.006})_{0.915}]TiO_3$. This material was mixed and pulverized in a pot mill by using pure water as the medium until the average particle diameter became from 2.0 $\mu$m to 3.0 $\mu$m, and then dried to prepare a third raw material.

The third raw material was heat-treated at 900°C to 1,250°C. In this Example, the heat treatment was performed under the following conditions. The third raw material was heat-treated at 1,150°C for 4 hours in the atmosphere so as to react the $(BiA)TiO_3$-based calcined powder and the $(BaR)[TiM]O_3$-based calcined powder. The heat treatment temperature was set to a temperature at which respective diffraction lines of the $(BiA)TiO_3$-based calcined powder and the $(BaR)[TiM]O_3$-based calcined powder become one line in the X-ray diffraction.

Subsequently, $Ba_6Ti_{17}O_{40}$ was added in amount of 0.72 mol% based on the entire raw material of the semiconductor ceramic composition.

Thereafter, the mixture was formed. In this Example, the forming was performed under the following conditions. PVA was added and mixed, and then granulated. The granulated powder obtained was formed into a plate of 15 mm $\times$ 15 mm $\times$ 3.4 mm by a monoaxial pressing apparatus and subjected to binder removal at 700°C.

Furthermore, the formed powder was sintered. In this Example, the sintering was performed under the following conditions. The formed powder was sintered by holding it at 1,420°C for 4 hours in nitrogen under the condition of an oxygen concentration of 70 ppm.

The sintered body obtained was processed into a plate of 10 mm $\times$ 10 mm $\times$ 1.0 mm to produce a test piece, an ohmic electrode was coated thereon, a cover electrode was further coated, and drying at 180°C and then baking at 600°C for a holding time of 10 minutes were performed to form electrodes.

The measured results of temperature coefficient $\alpha$ of resistance and room-temperature resistivity $R_{25}$ are shown in Tables 5 and 6. With any R employed, a semiconductor ceramic composition having a large temperature coefficient $\alpha$ of resistance was obtained. Although this may depend on the sintering temperature, when Y or Er is used, a semiconductor ceramic composition having a room-temperature resistivity $R_{25}$ of 100 $\Omega$cm or less is likely to be obtained, and when Tm, Yb, Lu or Sc is used, a semiconductor ceramic composition having a room-temperature resistivity $R_{25}$ of more than 100 $\Omega$cm is likely to be obtained. In the semiconductor ceramic composition using Yb, the room-temperature resistivity $R_{25}$ was 3,000 $\Omega$cm or more. Also, in the case of Ho, when the sintering temperature is 1,400°C or more, a semiconductor ceramic composition having a room-temperature resistivity $R_{25}$ of 100 $\Omega$cm or less is obtained.

Table 5

| R | Sintering Temperature (°C) | | | |
|---|---|---|---|---|
| | 1320 | 1340 | 1380 | 1420 |
| Ho | - | - | 300.6 | 40.9 |
| Y | - | - | 51.2 | 42.5 |
| Er | 120.5 | 58.4 | 58.4 | 51.6 |
| Tm | 434.3 | 532.5 | 176.8 | 85.7 |
| Yb | 13049.5 | 14428.4 | 5518.6 | 3049.9 |
| Lu | 109.9 | 216.6 | 584.7 | 272.8 |
| Sc | - | 130.4 | 253.9 | - |
| Room-temperature resistivity (unit: Ω•cm) | | | | |

Table 6

| R | Sintering Temperature (°C) | | | |
|---|---|---|---|---|
| | 1320 | 1340 | 1380 | 1420 |
| Ho | - | - | 9.2 | 4.9 |
| Y | - | - | 5.9 | 4.5 |
| Er | 8.3 | 6.5 | 5.9 | 6.0 |
| Tm | 9.0 | 8.7 | 8.1 | 6.7 |
| Yb | 7.4 | 6.5 | 6.9 | 4.8 |
| Lu | 8.5 | 7.4 | 8.7 | 7.6 |
| Sc | - | 7.3 | 5.9 | - |
| Temperature coefficient $\alpha$ of resistance (unit: %/°C) | | | | |

In all semiconductor ceramic compositions obtained in this Example, the heat-resistant temperature was 350°C or less, the withstand voltage was 350 V or less, and the normalized withstand voltage was 3.0 or more.

While the invention has been described in detail and with reference to specific embodiments thereof, it will be apparent to one skilled in the art that various changes and modifications can be made therein without departing from the spirit and scope of the invention.

This application is based on Japanese Patent Application (Patent Application No. 2012-96546) filed on April 20, 2012, Japanese Patent Application (Patent Application No. 2012-118120) filed on May 24, 2012, and Japanese Patent Application (Patent Application No. 2012-279711) filed on December 21, 2012, the contents of which are incorporated herein by way of reference.

INDUSTRIAL APPLICABILITY

The semiconductor ceramic composition according to the invention is optimal as a material for a PTC heater, a PTC thermistor, a PTC switch, a temperature detector, and the like.

**Claims**

1. A method for producing a semiconductor ceramic composition which is a lead-free semiconductor ceramic composition in which a portion of Ba in a $BaTiO_3$-based oxide is substituted by Bi and A (wherein A is at least one kind of Na, Li and K), the method comprising:

calcining a raw material for forming the semiconductor ceramic composition at 700°C to 1,300°C;
adding an oxide containing Ba and Ti, which becomes a liquid phase at 1,300°C to 1,450°C, to the calcined raw material;
forming the raw material to which the oxide containing Ba and Ti was added; and then
sintering the raw material to which the oxide containing Ba and Ti was added at a temperature of 1,300°C to 1,450°C.

**2.** The method for producing a semiconductor ceramic composition according to claim 1, the method comprising:

preparing, as the raw material, a $(BiA)TiO_3$-based first raw material and a $(BaR)[TiM]O_3$ (wherein R is at least one kind of rare earth elements including Y, and M is at least one kind of Nb, Ta and Sb)-based second raw material, respectively;
calcining the first raw material at 700°C to 950°C and the second raw material at 900°C to 1,300°C;
preparing a third raw material by mixing respective calcined materials;
adding the oxide containing Ba and Ti to the third raw material; and then forming and sintering the third raw material to which the oxide containing Ba and Ti was added.

**3.** The method for producing a semiconductor ceramic composition according to claim 2, wherein the third raw material is heat-treated at 900°C to 1,250°C, and then the oxide containing Ba and Ti is added thereto.

**4.** The method for producing a semiconductor ceramic composition according to any one of claims 1 to 3, wherein the oxide containing Ba and Ti is added in an amount of 0.1 mol% to 1.0 mol%, in terms of $Ba_6Ti_{17}O_{40}$, based on the entire raw material (including the oxide containing Ba and Ti) of the semiconductor ceramic composition.

**5.** The method for producing a semiconductor ceramic composition according to any one of claims 1 to 4, wherein the first and second raw materials are mixed such that the semiconductor ceramic composition is represented by a composition formula of $[(BiA)_x(Ba_{1-y}R_y)_{1-x}][Ti_{1-z}M_z]O_3$ (wherein A is at least one kind of Na, Li and K, R is at least one kind of rare earth elements including Y, and M is at least one kind of Nb, Ta and Sb) in which x, y and z satisfy $0<x\leq0.2$, $0\leq y\leq0.05$ and $0\leq z\leq0.01$ (provided that $y+z>0$).

*FIG. 1*

STEP 1
PREPARATION OF FIRST RAW MATERIAL
PREPARATION OF SECOND RAW MATERIAL
STEP 2
CALCINATION AT 700 TO 950°C
CALCINATION AT 900 TO 1,300°C
STEP 3
MIXING OF BOTH CALCINED POWDERS (THIRD RAW MATERIAL)
STEP 4
HEAT TREATMENT AT 900 TO 1,250°C
STEP 5
ADDITION OF Ba-Ti-CONTAINING OXIDE
STEP 6
FORMING
STEP 7
SINTERING AT 1,300 TO 1,450°C

*FIG. 2*

TL POINT
RESISTIVITY RL
TEMPERATURE
COEFFICIENT OF
RESISTANCE: α
Rc(R25×2)
R25
Rmin
25℃
TRmin
Tc
TL
TEMPERATURE

*FIG. 3*

CURRENT (log)
VOLTAGE (log)
WITHSTAND
VOLTAGE V0

0.59mol%
0.51mol%
0.44mol%
0.37mol%
0.29mol%
6
4
2
0
-2
1300
1320
1340
1360
1380
1400
1420
1440
SINTERING TEMPERATURE (°C)
TEMPERATURE COEFFICIENT OF RESISTANCE (%/°C)


FIG. 4

*FIG. 5*

STEP 1
PREPARATION OF FIRST RAW MATERIAL
PREPARATION OF SECOND RAW MATERIAL
STEP 2
CALCINATION AT 700 TO 950°C
CALCINATION AT 900 TO 1,300°C
STEP 3
MIXING OF BOTH CALCINED POWDERS (THIRD RAW MATERIAL)
STEP 5b
ADDITION OF Ba-Ti-CONTAINING OXIDE
STEP 4
HEAT TREATMENT AT 900 TO 1,250°C
STEP 6b
FORMING
STEP 7b
SINTERING AT 1,300 TO 1,450°C

FIG. 6

STEP 1
PREPARATION OF FIRST RAW MATERIAL
PREPARATION OF SECOND RAW MATERIAL
STEP 2
CALCINATION AT 700 TO 950°C
CALCINATION AT 900 TO 1,300°C
STEP 3
MIXING OF BOTH CALCINED POWDERS (THIRD RAW MATERIAL)
STEP 4
HEAT TREATMENT AT 900 TO 1,250°C
STEP 6'
FORMING
STEP 7'
SINTERING AT 1,300 TO 1,450°C

FIG. 7

STEP 1
PREPARATION OF FIRST RAW MATERIAL
PREPARATION OF SECOND RAW MATERIAL
STEP 2
CALCINATION AT 700 TO 950°C
CALCINATION AT 900 TO 1,300°C
STEP 3
MIXING OF BOTH CALCINED POWDERS (THIRD RAW MATERIAL)
STEP 5c
ADDITION OF Ba-Ti-CONTAINING OXIDE
STEP 6c
FORMING
STEP 7c
SINTERING AT 1,300 TO 1,450°C

FIG. 8

10000000
1000000
100000
10000
1000
100
10
1
0
2000
4000
6000
8000
ROOM-TEMPERATURE RESISTIVITY $R_{25}$ (Ω•cm)
OXYGEN CONCENTRATION (ppm)

## INTERNATIONAL SEARCH REPORT

International application No.
PCT/JP2013/061688

A. CLASSIFICATION OF SUBJECT MATTER
*C04B35/468*(2006.01)i, *H01C7/02*(2006.01)i

According to International Patent Classification (IPC) or to both national classification and IPC

B. FIELDS SEARCHED

Minimum documentation searched (classification system followed by classification symbols)
C04B35/468, H01C7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2008/050877 A1 (Hitachi Metals, Ltd.), 02 May 2008 (02.05.2008), claims; paragraphs [0032], [0043], [0045] & US 2010/0075824 A1 & US 7910027 B2 & EP 2096092 A1 & EP 2077257 A1 & WO 2008/050876 A1 & CN 101395100 A & KR 10-2009-0074061 A & KR 10-2009-0082103 A & CN 101528632 A | 1-2,4-5<br>3 |
| Y<br>A | JP 11-87108 A (TDK Corp.), 30 March 1999 (30.03.1999), claims; paragraphs [0006], [0044] & US 6221800 B1 & EP 961299 A1 & WO 1999/013479 A1 & DE 69833203 D & TW 393652 B & CN 1237265 A | 1-2,4-5<br>3 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
08 July, 2013 (08.07.13)

Date of mailing of the international search report
16 July, 2013 (16.07.13)

Name and mailing address of the ISA/
Japanese Patent Office

Facsimile No.

Authorized officer

Telephone No.

Form PCT/ISA/210 (second sheet) (July 2009)

INTERNATIONAL SEARCH REPORT

International application No. PCT/JP2013/061688

C (Continuation). DOCUMENTS CONSIDERED TO BE RELEVANT

| Category* | Citation of document, with indication, where appropriate, of the relevant passages | Relevant to claim No. |
|---|---|---|
| Y | KIRBY K W, Phase Relations in the Barium Titanate-Titanium Oxide System., J. Am. Ceram. Soc., 1991.08, Vol.74 No.8, P.1841-1847 | 1-2,4-5 |
| Y | Nobuyuki YAMAMOTO, "PTC effect of semiconducting BaTiO3 quenched from high temperatures", Journal of the Japan Society of Powder and Powder Metallurgy, 1987.02, vol.34, no.2, pages 85 to 90 | 4 |
| A | JP 2000-264726 A (TDK Corp.), 26 September 2000 (26.09.2000), paragraph [0029] (Family: none) | 1-5 |
| P,X | WO 2013/051486 A1 (Hitachi Metals, Ltd.), 11 April 2013 (11.04.2013), claims; paragraph [0069] (Family: none) | 1-2,4-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S56169301 A
- WO 2007097462 A
- WO 2010067866 A
- JP 2012096546 A
- JP 2012118120 A
- JP 2012279711 A